(19) Europäisches Patentamt
European Patent Office
Office européen des brevets

(11) **EP 4 115 973 A1**

(12) **EUROPEAN PATENT APPLICATION**
published in accordance with Art. 153(4) EPC

(43) Date of publication:
**11.01.2023 Bulletin 2023/02**

(21) Application number: **21784575.9**

(22) Date of filing: **02.03.2021**

(51) International Patent Classification (IPC):
**B01J 20/30** (2006.01)       **B01J 20/24** (2006.01)
**B01J 20/26** (2006.01)

(52) Cooperative Patent Classification (CPC):
**B01J 20/24; B01J 20/26; B01J 20/30**

(86) International application number:
**PCT/JP2021/007969**

(87) International publication number:
**WO 2021/205780 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.04.2020 JP 2020071221**

(71) Applicant: **Unicharm Corporation
Shikokuchuo-shi, Ehime 799-0111 (JP)**

(72) Inventors:
• **KONISHI, Takayoshi**
  **Kanonji-shi, Kagawa 769-1602 (JP)**
• **BANDOH, Takeshi**
  **Kanonji-shi, Kagawa 769-1602 (JP)**
• **HIRAOKA, Toshio**
  **Kanonji-shi, Kagawa 769-1602 (JP)**
• **KURITA, Noritomo**
  **Kanonji-shi, Kagawa 769-1602 (JP)**

(74) Representative: **Dolleymores
9 Rickmansworth Road
Watford, Hertfordshire WD18 0JU (GB)**

(54) **METHOD FOR PRODUCING HIGHLY WATER-ABSORBING RECYCLED POLYMER, AND HIGHLY WATER-ABSORBING RECYCLED POLYMER**

(57)     A purpose of the present invention is to provide a method for producing a highly water-absorbing recycled polymer the method making it possible to inhibit particles from tenaciously adhering to each other and to efficiently dry the particles and being capable of producing a highly water-absorbing recycled polymer having excellent whiteness. The method is for producing a highly water-absorbing recycled polymer from a spent highly water-absorbing polymer and is characterized by comprising a dehydration step in which the spent highly water-absorbing polymer is dehydrated to form a dehydrated highly water-absorbing polymer a particle adhesion step in which particles of a highly water-absorbing polymer are adhered to the dehydrated highly water-absorbing polymer to form a highly water-absorbing polymer with the particles adherent thereto and to simultaneously cause the particles to absorb the water held by the dehydrated highly water-absorbing polymer and a drying step in which the highly water-absorbing polymer with the particles adherent thereto is dried to form the highly water-absorbing recycled polymer.

EP 4 115 973 A1

**Description**

FIELD

The present disclosure relates to a method of manufacturing a super absorbent recycled polymer regenerated from a used super absorbent polymer, and a super absorbent recycled polymer regenerated from a used super absorbent polymer.

BACKGROUND

The regeneration and reuse of used super absorbent polymers have been investigated. For example, Patent Literature 1 discloses the following method of regenerating an absorbent resin. The method of regenerating an absorbent resin is a method in which the absorbent resin that has absorbed a liquid to be absorbed from a used bodily fluid absorbent article is taken out, washed and is subjected to a dehydration treatment, and the washing and/or the dehydration treatment includes an operation of placing the absorbent resin in an environment in which the liquid to be absorbed that has been absorbed by the absorbent resin is discharged.

[CITATION LIST]

[PATENT LITERATURE]

Patent Literature 1: Japanese Unexamined Patent Publication No. 2003-326161

SUMMARY

[TECHNICAL PROBLEM]

In the method described in Patent Literature 1, although the absorbent resin that has absorbed the liquid to be absorbed is washed and/or is subjected to the dehydration treatment, all the liquid to be absorbed is not dehydrated from the absorbent resin, and therefore, the regenerated absorbent resin tends to easily exhibit the color of the liquid to be absorbed.
In addition, in the method described in Patent Literature 1, when a drying step is performed to obtain a regenerated absorbent resin, the absorbent resins are fixed to each other, and therefore, a crushing step and a classification step are required as described in Example of Reference 1 or the like.
Therefore, an aspect of the present disclosure is to provide a method of manufacturing a super absorbent recycled polymer capable of manufacturing a super absorbent recycled polymer having excellent whiteness while suppressing the fixing of the particles to each other and efficiently drying each particle.

[SOLUTION TO PROBLEM]

The present inventors have found that a method of manufacturing a super absorbent recycled polymer regenerated from a used super absorbent polymer, the method comprising: a dehydration step of dehydrating the used super absorbent polymer to form a dehydrated super absorbent polymer; a particle group attachment step of attaching a particle group of a super absorbent polymer to the dehydrated super absorbent polymer to form a super absorbent polymer having the particle group attached thereto, and causing the particle group to absorb moisture retained by the dehydrated super absorbent polymer; and a drying step of drying the super absorbent polymer having the particle group attached thereto to form the super absorbent recycled polymer.

[ADVANTAGEOUS EFFECT OF THE INVENTION]

The method of manufacturing a super absorbent recycled polymer according to the present disclosure makes it possible to suppress the fixing of particles to each other, to efficiently dry each particle, and to manufacture a super absorbent recycled polymer having excellent whiteness.

DESCRIPTION OF EMBODIMENTS

Specifically, the present disclosure relates to the following aspects.

[Aspect 1]

A method of manufacturing a super absorbent recycled polymer regenerated from a used super absorbent polymer, the method comprising:

a dehydration step of dehydrating the used super absorbent polymer to form a dehydrated super absorbent polymer;
a particle group attachment step of attaching a particle group of a super absorbent polymer to the dehydrated super absorbent polymer to form a super absorbent polymer having the particle group attached thereto, and causing the particle group to absorb moisture retained by the dehydrated super absorbent polymer; and
a drying step of drying the super absorbent polymer having the particle group attached thereto to form the super absorbent recycled polymer.

The method includes a predetermined dehydration step, a particle group attachment step, and a drying step. In the above-mentioned particle group attachment step, the particle group of the super absorbent polymer is attached to the dehydrated super absorbent polymer and absorbs moisture retained by the dehydrated super absorbent polymer. In addition, when the particle group of the super absorbent polymer is attached to the dehydrated super absorbent polymer, the surface area thereof is increased. Therefore, the method makes it possible to, while suppressing the fixing of the particles to each other, effectively dry each particle in the drying step to effectively form a super absorbent recycled polymer.

It should be noted that in the present specification, suppressing the fixing between particles can be referred to as a "fixing suppression property", and efficiently drying each particle can be referred to as an "efficient drying property".

Further, since the above-mentioned super absorbent recycled polymer has the particle group attached to the surface thereof, the super absorbent recycled polymer is likely to diffusely reflect light and to have excellent whiteness, so that the user can feel cleanliness and the user can feel a sense of relief.

[Aspect 2]

The method according to aspect 1, wherein
the super absorbent recycled polymer has a whiteness (W) of 80 or more and a yellowness (YI) of 20 or less.

The super absorbent recycled polymer regenerated from the used super absorbent polymer is often colored in the color of the liquid absorbed during use. For example, in a case where the used super absorbent polymer absorbs excrement, the used super absorbent polymer is often colored in a brown-based color.

In such a case, the super absorbent recycled polymer formed from the used super absorbent polymer often remains colored in the brown-based color.

In the method, since the super absorbent recycled polymer has a predetermined whiteness W and a predetermined yellowness YI, the super absorbent recycled polymer has excellent whiteness and the user can feel cleanliness.

[Aspect 3]

The method according to aspect 1 or 2, wherein
in the dehydration step, the dehydrated super absorbent polymer is formed by contacting the used super absorbent polymer with a salt, an acid, or a base.

In the method, in the dehydration step, the dehydrated super absorbent polymer is formed by bringing the dehydrated super absorbent polymer into contact with a salt, an acid, or a base. Therefore, the dehydrated super absorbent polymer is likely to have a high solid content, the particle group of the super absorbent polymer is easily attached to the dehydrated super absorbent polymer in the particle group attachment step, and the drying step has excellent fixing suppression property and efficient drying property.

[Aspect 4]

The method according to aspect 3, wherein
in the dehydration step, the dehydrated super absorbent polymer is formed by contacting the used super absorbent polymer with the salt.

In the method, in the dehydration step, the used super absorbent polymer is brought into contact with a predetermined salt, and the used super absorbent polymer is dehydrated using the osmotic pressure difference. Therefore, the method can form a dehydrated super absorbent polymer having a high solid content. Further, there is a tendency that the solid content of the dehydrated super absorbent polymer is increased. Due to that, in the particle group attachment step, the particle group of the super absorbent polymer is easily attached to the dehydrated super absorbent polymer, and the drying step is likely to have excellent fixing suppression property and efficient drying property.

[Aspect 5]

The method according to aspect 3, wherein
the used super absorbent polymer contains an acid group, in the dehydration step, the dehydrated super absorbent polymer is formed by immersing the used super absorbent polymer in an aqueous solution containing the base, and the base is an alkali metal hydroxide.

In the method, in the dehydration step, the used super absorbent polymer is dehydrated using an aqueous solution containing an alkali metal hydroxide. Therefore, since a part of the acid group of the used super absorbent polymer and a salt thereof (particularly, calcium salt) forms an alkali metal salt, the super absorbent recycled polymer, particularly, a portion derived from the used super absorbent polymer, has an excellent absorption property. Further, there is a tendency that the solid content of the dehydrated super absorbent polymer is increased. Due to that, in the particle group attachment step, the particle group of the super absorbent polymer is easily attached to the dehydrated super absorbent polymer, and the drying step is likely to have excellent fixing suppression property and efficient drying property.

[Aspect 6]

The method according to aspect 3, wherein
the used super absorbent polymer contains an acid group, and in the dehydration step, the acid is an acid having an acid dissociation constant ($pK_a$, in water) which is smaller than an acid dissociation constant ($pK_a$, in water) of the acid group.

In the method, in the dehydration step, a dehydrated super absorbent polymer is formed using an aqueous solution containing a predetermined acid. Therefore, there is a high tendency that the acid group of the used super absorbent polymer has a free acid group from the salt thereof, and there is a tendency that the solid content of the dehydrated super absorbent polymer is increased. Due to that, in the particle group attachment step, the particle group of the super absorbent polymer is easily attached to the dehydrated super absorbent polymer, and the drying step is likely to have excellent fixing suppression property and efficient drying property.

[Aspect 7]

The method according to any one of aspects 1 to 6, wherein
in the dehydration step, the dehydrated super absorbent polymer has a solid content of 10 mass% or more.

In the method, in the dehydration step, the dehydrated super absorbent polymer has a predetermined solid content. Therefore, in the particle group attachment step, the particle group of the super absorbent polymer is easily attached to the dehydrated super absorbent polymer, and the drying step is likely to have excellent fixing suppression property and efficient drying property.

[Aspect 8]

The method according to any one of aspects 1 to 7, wherein
in the particle group attachment step, the super absorbent polymer having the particle group attached thereto has a solid content of more than 30 mass%.

In the method, since the super absorbent polymer having the particle group attached thereto has a predetermined solid content in the particle group attachment step, the drying step has excellent fixing suppression property and efficient drying property.

[Aspect 9]

The method according to any one of aspects 1 to 8, wherein
in the particle group attachment step, the particle group of the super absorbent polymer has a solid content of 90 mass% or more.

In the method, since the particle group of the super absorbent polymer has a predetermined solid content in the particle group attachment step, in the particle group attachment step, the particle group of the super absorbent polymer is easily attached to the dehydrated super absorbent polymer, and the drying step is likely to have excellent fixing suppression property and efficient drying property.

[Aspect 10]

The method according to any one of aspects 1 to 9, wherein
in the particle group attachment step, the particle group of the super absorbent polymer includes 60 mass% or more of particles having a particle diameter of more than 45 μm and 150 μm or less.
In the method, since the particle group of the super absorbent polymer contains a predetermined amount of particles having a predetermined particle diameter in the particle group attachment step, in the particle group attachment step, the particle group of the super absorbent polymer is easily attached to the dehydrated super absorbent polymer, and the drying step has excellent fixing suppression property and efficient drying property. Further, since the super absorbent recycled polymer has the particle group containing a predetermined amount of particles having a predetermined particle diameter on the surface of the super absorbent recycled polymer, the super absorbent recycled polymer is likely to diffusely reflect light and to have excellent whiteness.

[Aspect 11]

The method according to any one of aspects 1 to 10, wherein
in the drying step, the super absorbent polymer having the particle group attached thereto is dried at a drying temperature of 80°C to 150°C for 60 to 180 minutes.
In the method, since the super absorbent polymer having the particle group attached thereto is dried under predetermined conditions in the drying step, the coloration, discoloration, and the like of the super absorbent recycled polymer can be suppressed.

[Aspect 12]

The method according to any one of aspects 1 to 11, wherein

the used super absorbent polymer is included in a used sanitary product which contains pulp fibers, and
the dehydration step includes the following sub-steps of

a primary dehydration sub-step of primarily dehydrating a mixture including the used super absorbent polymer and the pulp fibers to form a primarily dehydrated super absorbent polymer having a solid content of 2.0 to 9.0 mass% from the used super absorbent polymer, and separating the primarily dehydrated super absorbent polymer and the pulp fibers, and
a secondary dehydration sub-step of dehydrating the primarily dehydrated super absorbent polymer to form a secondarily dehydrated super absorbent polymer having a solid content of 10.0 to 40.0 mass%.

In the method, the dehydration step includes the primary dehydration sub-step and the secondary dehydration sub-step. In the primary dehydration sub-step, since the primarily dehydrated super absorbent polymer having a predetermined solid content is formed from the primarily dehydrated super absorbent polymer, a mixture of the primarily dehydrated super absorbent polymer and the pulp fibers from constituent members that constitute the sanitary product is easily separated. Further, in the separated mixture, the primarily dehydrated super absorbent polymer and the pulp fibers are spaced apart from each other, and then the primarily dehydrated super absorbent polymer is easily taken out.
Next, in the secondary dehydration sub-step, a secondarily dehydrated super absorbent polymer (dehydrated super absorbent polymer) having a predetermined solid content is formed from the primarily dehydrated super absorbent polymer. Therefore, the moisture retained by the primarily dehydrated super absorbent polymer can be discharged and the super absorbent polymer can be purified. In the particle group attachment step, the particle group of the super absorbent polymer is easily attached to the dehydrated super absorbent polymer, and the drying step is likely to have excellent fixing suppression property and efficient drying property.

[Aspect 13]

A super absorbent recycled polymer regenerated from a used super absorbent polymer, the super absorbent recycled polymer comprising:

a super absorbent polymer recovered from the used super absorbent polymer, and a particle group of a super absorbent polymer linked to a surface of the super absorbent polymer, wherein
the super absorbent recycled polymer has a whiteness (W) of 80 or more, and
a yellowness (YI) of 20 or less.

The super absorbent recycled polymer has a particle group of the super absorbent polymer linked to the surface thereof and has a predetermined whiteness W and a yellowness YI of 20 or less. Therefore, the above-mentioned super absorbent recycled polymer has excellent whiteness, so that the user can feel cleanliness and the user can feel a sense of relief.

[Aspect 14]

The super absorbent recycled polymer according to aspect 13, wherein the super absorbent recycled polymer has a water absorption ratio of 30 times (g/g) or more.
The super absorbent recycled polymer has a predetermined water absorption ratio and has an excellent absorption property.

[Aspect 15]

The super absorbent recycled polymer according to aspect 13 or 14, wherein
the super absorbent recycled polymer has a water retention ratio of 20 times (g/g) or more.
The super absorbent recycled polymer has a predetermined water retention ratio and has an excellent water retention property.
Hereinafter, the method of manufacturing a super absorbent recycled polymer regenerated from a used super absorbent polymer according to the present disclosure (hereinafter, referred to as the" method of manufacturing a super absorbent recycled polymer") and the super absorbent recycled polymer regenerated from a used super absorbent polymer (hereinafter, referred to as the "super absorbent recycled polymer") will be described in detail.
The method of manufacturing a super absorbent recycled polymer according to the present disclosure includes the following steps:

- a dehydration step of dehydrating the used super absorbent polymer to form a dehydrated super absorbent polymer (hereinafter, referred to as a "dehydration step"),
- a particle group attachment step of attaching a particle group of a super absorbent polymer to the dehydrated super absorbent polymer to form a super absorbent polymer having the particle group attached thereto, and causing the particle group to absorb moisture retained by the dehydrated super absorbent polymer (hereinafter, referred to as a "particle group attachment step"), and
- a drying step of drying the super absorbent polymer having the particle group attached thereto to form the super absorbent recycled polymer (hereinafter, referred to as a "drying step").

<Dehydration Step>

In the dehydration step, a used super absorbent polymer is dehydrated to form a dehydrated super absorbent polymer.
In the present disclosure, the used super absorbent polymer is not particularly limited as long as the used super absorbent polymer is an absorbent polymer that absorbs liquid, and examples thereof include super absorbent polymers contained in used sanitary products. Examples of the sanitary products include disposable diapers, urine-absorbing pads, disposable underpants, sanitary napkins, panty liners, bed sheets, and pet sheets.
It should be noted that the used sanitary product refers to a sanitary product used by the user, a sanitary product that has absorbed excrement of the user, and a sanitary product used by the user, and includes a sanitary product that has not absorbed excrement of the user, a sanitary product disposed of unused (for example, a sanitary product in which the super absorbent polymer absorbs a treatment liquid for recycling the sanitary product), and the like.
As the composition of the super absorbent polymer, those well-known in the technical field of the sanitary product can be exemplified, and examples thereof include starch-based, cellulose-based, synthetic polymer-based super absorbent polymers. Examples of the starch-based or cellulose-based super absorbent polymers include starch-acrylic acid (salt) graft copolymers, saponified substance of starch-acrylonitrile copolymers, and crosslinked substance of sodium carboxymethyl cellulose. Examples of the synthetic polymer-based super absorbent polymer include polyacrylate-based, polysulfonate-based, maleate anhydride-based, polyacrylamidebased, polyvinyl alcohol-based, polyethylene oxide-based, polyaspartate-based, polyglutamatebased, polyalginate-based, starch-based, and cellulose-based super absorbent polymers (SAPs). The super absorbent polymer can be divided into a polymer having an acid group (for example, a carboxyl group or a sulfo group) and a polymer having no acid group.
The technique for dehydrating used super absorbent polymer include those well-known in the technical field and examples thereof include salts, acids, bases, hydrophilic organic solvents, temperature changes, water absorbent agents, and the like.

In the dehydration step, the dehydrated super absorbent polymer can be dehydrated so as to have a predetermined solid content. The predetermined solid content is preferably 10.0 mass% or more, more preferably 20.0 mass% or more, and even more preferably 30.0 mass% or more. Further, the predetermined solid content is preferably 50.0 mass% or less, and more preferably 40.0 mass% or less. Therefore, in the particle group attachment step, the particle group of the super absorbent polymer is easily attached to the dehydrated super absorbent polymer, and the drying step is likely to have excellent fixing suppression property and efficient drying property.

In the present specification, the solid content is measured as follows.

(1) The mass $m_1$ (g) before drying of a sample to be measured (the particle group of the super absorbent polymer, the super absorbent polymer having the particle group attached thereto, the super absorbent recycled polymer, or the like) is measured.

(2) The sample to be measured is dried at 50°C for 180 minutes, and the mass $m_2$ (g) of the sample after drying is measured.

(3) The solid content (mass%) is calculated by the following formula:

$$\text{Solid content (mass\%)} = 100 \times m_2/m_1$$

In the above-mentioned dehydration step, the used super absorbent polymer can be dehydrated by immersing the super absorbent polymer in a salt itself or an aqueous solution containing the salt (for example, a saturated aqueous solution). Examples of the salt include salts of bases and acids. Examples of the base include hydroxides of alkali metals (for example, lithium, sodium, and potassium), and hydroxides of alkaline earth metals (for example, beryllium, magnesium, calcium, strontium, and barium).

Examples of the hydroxides of the alkali metals include lithium hydroxide, sodium hydroxide, potassium hydroxide, and any combinations thereof. Examples of the hydroxides of the alkaline earth metals include beryllium hydroxide, magnesium hydroxide, calcium hydroxide, strontium hydroxide, barium hydroxide, and any combination thereof.

In a case where the super absorbent polymer has an acid group (for example, a carboxyl group or a sulfo group), it is preferable that the base is a hydroxide of an alkali metal. This is from the viewpoint of making it difficult to inhibit the absorption property of the super absorbent recycled polymer.

The above-mentioned acid is not particularly limited, and examples thereof include an inorganic acid and an organic acid.

Examples of the inorganic acid include sulfuric acid, hydrochloric acid, nitric acid, phosphoric acid, boric acid, bromic acid, and iodic acid. Examples of the organic acid include acids having an acid group, for example, a carboxyl group, a sulfo group, and the like. It should be noted that an organic acid having a sulfo group is referred to as a sulfonic acid, and an organic acid having a carboxyl group and not having a sulfo group is referred to as a carboxylic acid. The above-mentioned organic acid is preferably an organic acid having a carboxyl group, particularly, a carboxylic acid, from the viewpoint of protecting the equipment.

In a case where the organic acid has a carboxyl group, the organic acid may have one or more carboxyl groups per one molecule, and preferably has a plurality of carboxyl groups per one molecule. Accordingly, it is easier for the organic acid to form chelate complexes with divalent or higher valent metals included in excrement, for example, such as calcium, whereby the effect of making it difficult to inhibit the absorption property of the super absorbent recycled polymer and making it easier to lower the ash of recycled pulp fibers to be manufactured from used sanitary products can be obtained.

Examples of the organic acid include citric acid, tartaric acid, malic acid, succinic acid, oxalic acid (the aforementioned being carboxylic acids with a plurality of carboxyl groups), gluconic acid (C6), pentanoic acid (C5), butanoic acid (C4), propionic acid (C3), glycolic acid (C2), acetic acid (C2), for example, glacial acetic acid, formic acid (C1), lactic acid (the aforementioned being carboxylic acids with one carboxyl group), methanesulfonic acid, trifluoromethanesulfonic acid, benzenesulfonic acid, and p-toluenesulfone acid (the aforementioned being sulfonic acids).

In a case where the super absorbent polymer has an acid group (for example, a carboxyl group or a sulfo group), the acid may be an acid having an acid dissociation constant ($pK_a$, in water) larger than the acid dissociation constant ($pK_a$, in water) of the acid group in the super absorbent polymer. In such a case, the acid group of the super absorbent polymer easily forms a salt (for example, an alkali metal salt), and consequently, the super absorbent recycled polymer described below has an excellent water absorption ratio and an excellent water retention ratio.

In a case where the acid has a plurality of acid groups, for example, in a case where the acid is a dibasic acid or a tribasic acid, it is preferable that the smallest acid dissociation constant ($pK_a$, in water) among the acid dissociation constants ($pK_a$, in water) of the acid is larger than the acid dissociation constant ($pK_a$, in water) of the acid group of the super absorbent polymer, and, in a case where the super absorbent polymer has a plurality of types of acid groups, it is preferable that the smallest acid dissociation constant ($pK_a$, in water) among the acid dissociation constants ($pK_a$, in

water) of the acid is larger than the largest acid dissociation constant ($pK_a$, in water) among the plurality of types of the acid groups of the super absorbent polymer. This is from the viewpoint of making it easier for the acid group of the super absorbent polymer to form a salt (for example, an alkali metal salt).

In the present specification, as the acid dissociation constant ($pk_a$, in water), the value described in Handbook of Electrochemistry edited by The Electrochemical Society of Japan can be adopted.

According to the Handbook of Electrochemistry, the acid dissociation constants ($pk_a$, in water, 25°C) of the major compounds are as follows.

[Organic acids]

- Tartaric acid: 2.99 ($pK_{a1}$), 4.44 ($pK_{a2}$)
- Malic acid: 3.24 ($pK_{a1}$), 4.71 ($pK_{a2}$)
- Citric acid: 2.87 ($pK_{a1}$), 4.35 ($pK_{a2}$), 5.69 ($pK_{a3}$)

[Inorganic acids]

- Sulfuric acid: 1.99 ($pK_{a2}$)

The acid dissociation constant ($pk_a$, in water) of the acids which is not described in the Handbook of Electrochemistry can be obtained by measurement. Examples of the device capable of measuring the acid dissociation constant ($pK_a$, in water) include a compound physical property evaluation and analysis system, T3, manufactured by Sirius Analytical Instruments Ltd.

The carbonic acid as the above-mentioned acid is preferable, since it is difficult for carbonic acid to remain in an aqueous solution, or it is easy for carbonic acid to be removed by being heated, or the like.

Further, the above-mentioned acids other than carbonic acid, for example, in a case in which the wet state super absorbent recycled polymer has an acidic pH, can give an antibacterial property to the wet state super absorbent recycled polymer and the dry state super absorbent recycled polymer, or the like.

Examples of the salt include lithium carbonate, sodium carbonate, potassium carbonate, lithium hydrogen carbonate, sodium hydrogen carbonate, potassium hydrogen carbonate, lithium chloride, sodium chloride, potassium chloride, and the like.

It is preferable that the salt is used as it is or as an aqueous solution, and it is preferable that the salt is used as it is. Further, it is preferable that the above-mentioned aqueous solution is a saturated aqueous solution. This makes it easier for the dehydrated super absorbent polymer to have the above predetermined solid content.

In a case where the super absorbent polymer has an acid group (for example, a carboxyl group or a sulfo group), in the dehydration step, the used super absorbent polymer can be dehydrated by immersing the super absorbent polymer in an aqueous solution containing the acid. It is preferable that the acid is an acid having an acid dissociation constant ($pK_a$, in water) smaller than the acid dissociation constant ($pK_a$, in water) of the acid group in the super absorbent polymer (hereinafter, sometimes referred to as a "predetermined strong acid"). This is from the viewpoint of the dehydration efficiency of the used super absorbent polymer.

In a case where the acid has a plurality of acid groups, for example, in a case where the acid is a dibasic acid or a tribasic acid, it is preferable that the largest acid dissociation constant ($pK_a$, in water) among the acid dissociation constants ($pK_a$, in water) of the acid is smaller than the acid dissociation constant ($pK_a$, in water) of the acid group of the super absorbent polymer, and, in a case where the super absorbent polymer has a plurality of types of acid groups, it is preferable that the largest acid dissociation constant ($pK_a$, in water) among the acid dissociation constants ($pK_a$, in water) of the acid is smaller than the smallest acid dissociation constant ($pK_a$, in water) among the plurality of types of the acid groups of the super absorbent polymer. This is from the viewpoint of the dehydration efficiency of the super absorbent polymer.

Examples of the predetermined strong acid include acids described in the section of the salt, for example, sulfuric acid, nitric acid, hydrochloric acid, phosphoric acid, and the like.

It is preferable that the aqueous solution containing the acid has a predetermined pH, and the predetermined pH is preferably 4.5 or less, more preferably 4.0 or less, even more preferably 3.5 or less, and still even more preferably 3.0 or less. This makes it easier for the dehydrated super absorbent polymer to have the above predetermined solid content.

Further, the predetermined pH is preferably 0.5 or more, and more preferably 1.0 or more. When the predetermined pH is excessively low, there may be cases where the acid group of the super absorbent polymer is easily changed from the state of salt (for example, sodium salt) to the state of free acid, whereby the absorption property of the super absorbent recycled polymer is lowered.

It should be noted that, in the present specification, the pH means a value at 25°C. In addition, the pH can be measured using, for example, a twin pH meter AS-711 manufactured by HORIBA Co., Ltd.

In the dehydration step, for example, the used super absorbent polymer is stirred for about 5 to 60 minutes, although depending on the temperature, in the aqueous solution containing the acid, whereby the super absorbent polymer can be dehydrated and the dehydrated super absorbent polymer can be formed.

In the dehydration step, since the acid group of the super absorbent polymer having an acid group tends to be changed from the state of salt (for example, sodium salt) to the state of free acid, the absorption property of the super absorbent polymer tends to be lowered in some cases. When the water-absorbed super absorbent polymer is put into the aqueous solution containing the acid, the negatively charged hydrophilic group (for example, $-COO^-$) is neutralized by positively charged hydrogen ions ($H^+$) (for example, $-COOH$), whereby the ionic repulsion of the hydrophilic group is weakened, the absorption power is lowered, and the super absorbent polymer is dehydrated.

The temperature of the aqueous solution containing the acid in the dehydration step is not particularly limited, and may be, for example, room temperature (25°C) or may be higher than room temperature.

Specifically, the temperature of the aqueous solution containing the acid in the dehydration step is preferably higher than room temperature, more preferably, 60°C to 100°C, even more preferably, 70°C to 95°C, and still even more preferably, 80°C to 90°C. Accordingly, by the acid contained in the acid containing aqueous solution, it is easier to sterilize the fungi derived from excrement, or the like, included in the acid containing aqueous solution.

In a case where the super absorbent polymer has an acid group (for example, a carboxyl group or a sulfo group), in the dehydration step, the used super absorbent polymer can be dehydrated by immersing the super absorbent polymer in an aqueous solution containing a base.

Examples of the base include hydroxides of alkali metals (for example, lithium, sodium, and potassium), and hydroxides of alkaline earth metals (for example, beryllium, magnesium, and potassium), described in the section of the "salt", and hydroxides of alkali metals (for example, lithium, sodium, and potassium) are preferable. Therefore, the acid group of the super absorbent recycled polymer, particularly, a portion derived from the used super absorbent polymer forms a salt, and the portion derived from the used super absorbent polymer, and consequently, the super absorbent recycled polymer is likely to have an excellent absorption property.

It is preferable that the aqueous solution containing the base has a predetermined pH, and the predetermined pH is preferably 8.0 or more, more preferably 9.0 or more, and even more preferably 10.0 or more. Further, the predetermined pH is preferably 14.0 or less, and more preferably 13.0 or less. This makes it easier for the dehydrated super absorbent polymer to have the above predetermined solid content.

It should be noted that the pH measurement method is as described above.

The above-mentioned hydrophilic organic solvent is preferably those that are miscible with water, and examples thereof include alcohol-based solvents (for example, methanol, ethanol, propyl alcohol, an isomer thereof, butyl alcohol, and an isomer thereof), ketone-based solvents (for example, acetone or methyl ethyl ketone), and nitrile-based solvents (for example, acetonitrile).

In a case where the used super absorbent polymer is present as a mixture with pulp fibers, for example, in a case where the used super absorbent polymer is included in the used sanitary product, the dehydration step may include the following sub-steps:

- a primary dehydration sub-step of primarily dehydrating the mixture including the used super absorbent polymer and the pulp fibers to form a primarily dehydrated super absorbent polymer having a predetermined solid content from the used super absorbent polymer, and separating the predetermined primarily dehydrated super absorbent polymer and the pulp fibers, and
- a secondary dehydration sub-step of dehydrating the primarily dehydrated super absorbent polymer to form a secondarily dehydrated super absorbent polymer having a predetermined solid content.

Accordingly, in the primary dehydration sub-step, the pulp fibers are easily spaced apart from the primarily dehydrated super absorbent polymer, and the primarily dehydrated super absorbent polymer is easily separated from the pulp fibers. Further, in the following particle group attachment step, the particle group of the super absorbent polymer is easily attached to the dehydrated super absorbent polymer, and the drying step is likely to have excellent fixing suppression property and efficient drying property.

The predetermined solid content for the primarily dehydrated super absorbent polymer is preferably 2.0 to 9.0 mass%, more preferably 3.0 to 9.0 mass%, and even more preferably 3.0 to 9.0 mass%. The predetermined solid content for the secondarily dehydrated super absorbent polymer is preferably 10.0 to 40.0 mass%, more preferably 11.0 to 35.0 mass%, and even more preferably 12.0 to 30.0 mass%.

The solid content of the primarily dehydrated super absorbent polymer and the solid content of the secondarily dehydrated super absorbent polymer (dehydrated super absorbent polymer) can be adjusted by adjusting the above-described salts, acids, bases, hydrophilic organic solvents, temperature change, types of water absorbent agents, time of immersion therein, and the like.

<Particle Group Attachment Step>

In the particle group attachment step, the particle group of the super absorbent polymer is attached to the dehydrated super absorbent polymer to form a super absorbent polymer having the particle group attached thereto, and the moisture retained by the dehydrated super absorbent polymer is absorbed by the particle group.

The composition of the particle group of the super absorbent polymer is not particularly limited, and the super absorbent polymer can have a composition similar to that of the above-described super absorbent polymer (the used super absorbent polymer), and can have the same or different composition from that of the above-described super absorbent polymer (the used super absorbent polymer).

The specific composition of the particle group of the super absorbent polymer is as described in the section of "Dehydration Step", and therefore, the description thereof will be omitted.

It is preferable that the particle group of the super absorbent polymer is unused. This is from the viewpoint of the whiteness of the super absorbent recycled polymer.

Further, the particle group of the super absorbent polymer can be a fine powder generated when the super absorbent polymer is manufactured or a fine powder recovered when a sanitary product is manufactured.

Examples of the fine powder generated when the super absorbent polymer is manufactured include a fine powder generated during the pulverization of a bulk polymer, and a fine powder generated during the granulation of an emulsion polymer, a solution polymer, a reversed-phase suspension polymer, and the like.

Examples of the fine powder recovered when a sanitary product is manufactured include a fine powder recovered by a dust collector.

The particle group of the super absorbent polymer has a solid content of preferably 90.0 mass% or more, and more preferably 95.0 mass% or more. Therefore, in the particle group attachment step, the particle group of the super absorbent polymer is attached to the dehydrated super absorbent polymer to facilitate moisture absorption thereof and the drying step is likely to have excellent fixing suppression property and efficient drying property. It should be noted that the upper limit of the solid content of the particle group of the super absorbent polymer is 100.0 mass%.

The method of measuring the solid content is as described above.

The particle group of the super absorbent polymer preferably has a particle diameter smaller than that of the dehydrated super absorbent polymer, more preferably has a particle diameter of 300 $\mu$m or less, even more preferably has a particle diameter of 200 $\mu$m or less, and still even more preferably has a particle diameter of 150 $\mu$m or less. Further, the particle group of the super absorbent polymer has a particle diameter of preferably more than 1 $\mu$m, more preferably more than 30 $\mu$m, even more preferably more than 45 $\mu$m, and still even more preferably more than 50 $\mu$m.

It should be noted that the particle diameter of the dehydrated super absorbent polymer means the particle diameter after the dehydrated super absorbent polymer is dried at 50°C for 180 minutes.

Further, the particle group of the super absorbent polymer contains particles having a particle diameter in a range of the upper limit and the lower limit in a mass ratio of preferably, 60 mass% or more, more preferably, 70 mass% or more, even more preferably, 80 mass% or more, and still even more preferably, 90 mass% or more. Further, the particle group of the super absorbent polymer can contain the particles having a particle diameter in the range of the upper limit and the lower limit in a mass ratio of 100 mass% or less.

Therefore, the particle group of the super absorbent polymer has an excellent handling property. Further, in the particle group attachment step, the particle group of the super absorbent polymer is easily attached to the dehydrated super absorbent polymer, and the drying step is likely to have excellent fixing suppression property and efficient drying property. Further, the super absorbent recycled polymer is likely to diffusely reflect light and to have excellent whiteness.

In the present specification, the mass ratio of particles having a predetermined particle diameter with respect to the particle group of the super absorbent polymer and the super absorbent recycled polymer can be measured as follows using a sieve having a nominal opening defined in JIS Z 8801-1 according to ISO 17190-3.

(1) A sieve having a nominal opening of the lower limit of the particle diameter of a sample to be measured (hereinafter, also referred to as a "lower limit sieve"), and a sieve having a nominal opening of the upper limit of the particle diameter of the sample to be measured (hereinafter, also referred to as an "upper limit sieve") are prepared.

For example, in a case of measuring the amount of particles having a particle diameter of 45 to 300 $\mu$m in the sample, a lower limit sieve having a nominal opening of 45 $\mu$m and an upper limit sieve having a nominal opening of 300 $\mu$m are prepared.

(2) The mass $m_3$ (g), for example, 100 g, of the sample to be measured is accurately measured. (3) The sample to be measured is placed on the upper limit sieve of the device that has the lower limit sieve arranged under the upper limit sieve, sieved for 10 minutes, and allowed to pass through the upper limit sieve, and the mass $m_4$ (g) of the residue remaining on the lower limit sieve is measured.

(5) The mass ratio R (mass%) of the particles having a predetermined particle diameter is represented by the following formula:

$$R \text{ (mass\%)} = 100 \times m_4/m_3$$

In the particle group attachment step, the particle group of the super absorbent polymer is mixed at a ratio of preferably 50 to 150 parts by mass, more preferably 60 to 120 parts by mass, and even more preferably 70 to 100 parts by mass with respect to 100 parts by mass of the dehydrated super absorbent polymer. Accordingly, the following drying step is likely to have excellent fixing suppression property and efficient drying property. Further, the super absorbent recycled polymer is likely to have excellent whiteness.

The super absorbent polymer having the particle group attached thereto has a solid content of preferably 30.0 mass% or more, more preferably 35.0 mass% or more, and even more preferably 40.0 mass% or more. Further, the super absorbent polymer having the particle group attached thereto preferably has a solid content of 90.0 mass% or less. Accordingly, the following drying step is likely to have excellent fixing suppression property and efficient drying property.

<Drying Step>

In the drying step, the super absorbent polymer having the particle group attached thereto is dried to form a super absorbent recycled polymer.

In the drying step, the super absorbent polymer having the particle group attached thereto is dried at a drying temperature of, for example, 80°C to 150°C, and preferably, 100°C to 120°C. Therefore, in a short drying time, coloration is suppressed, and a super absorbent recycled polymer having an excellent absorption property can be easily formed. It should be noted that, when the drying temperature is increased, there may be cases where due to the occurrence of the dehydration condensation of the acid group and the like of the super absorbent recycled polymer, the absorption property of the super absorbent recycled polymer is lowered to cause the super absorbent recycled polymer to exhibit a brown-based color.

In the drying step, the super absorbent polymer having the particle group attached thereto can be dried for a drying time of, for example, 30 to 300 minutes, and preferably 60 to 180 minutes. When the drying time is short, there may be cases where the solid content of the super absorbent recycled polymer to be formed is decreased although depending on the drying temperature. When the drying time is long, there may be cases where due to the occurrence of the dehydration condensation of the acid group or the like of the super absorbent recycled polymer, the absorption property of the super absorbent recycled polymer is lowered, although depending on the drying temperature.

The drying step may be performed under reduced pressure, for example, at a pressure of 0.1 kPa or more and less than 100 kPa.

The super absorbent recycled polymer has a particle diameter of preferably more than 250 μm, more preferably more than 300 μm, and even more preferably more than 350 μm. Further, the super absorbent polymer having the particle group attached thereto has a particle diameter of preferably 800 μm or less, more preferably 750 μm or less, and even more preferably 700 μm or less.

Further, the super absorbent recycled polymer contains particles having a particle diameter in a range of the upper limit and the lower limit, preferably in a mass ratio of 60 mass% or more, more preferably 70 mass% or more, even more preferably 80 mass% or more, and still even more preferably 90 mass% or more. Further, the super absorbent recycled polymer may contain the particles having a particle diameter in the range of the upper limit and the lower limit, in a mass ratio of 100 mass% or less. Accordingly, the super absorbent recycled polymer is easily reused for various applications in which the super absorbent polymer is used, for example, sanitary products.

The super absorbent recycled polymer has a solid content of preferably 90.0 mass% or more, and more preferably 95.0 mass% or more. Further, the super absorbent recycled polymer preferably has a solid content of 100.0 mass% or less. Accordingly, the super absorbent recycled polymer is less likely to be fixed and is likely to have an excellent absorption property.

It should be noted that the method of measuring the solid content is as described above.

The super absorbent recycled polymer has a whiteness (W) of preferably 80 or more, more preferably 82 or more, and even more preferably 84 or more. Therefore, the super absorbent recycled polymer has excellent whiteness and makes it possible for the user to feel cleanliness.

Further, the super absorbent recycled polymer has a yellowness (YI) of preferably 20 or less, more preferably 19 or less, and even more preferably 18 or less. Therefore, the super absorbent recycled polymer has excellent whiteness and makes it possible for the user to feel cleanliness.

In the present specification, the whiteness (W) and the yellowness (YI) are measured as follows.

(1) A color difference meter of flicker photometer type Z-300A manufactured by NIPPON DENSHOKU INDUSTRIES Co., Ltd. is prepared in a constant-temperature and constanthumidity chamber at a temperature of 20 $\pm$ 5°C and a humidity of 65% $\pm$ 5% RH.

(2) 4.5 g of the super absorbent recycled polymer is evenly spread in a glass window (having a diameter of 40 mm) of the sample table of the color difference meter.

(3) On the spread super absorbent recycled polymer, a black plate (having a size of 80 mm $\times$ 80 mm, and a mass of 280 g) attached to the color difference meter is placed, and a load is applied to the super absorbent recycled polymer.

(4) In the color difference meter, the mode is selected to reflection and a transmission window diameter is selected to 30 mm to measure the whiteness (W) and the yellowness (YI) of the super absorbent recycled polymer.

The super absorbent recycled polymer has a water absorption ratio of preferably 30 times (g/g) or more, more preferably 40 times (g/g) or more, and even more preferably 45 times (g/g) or more. The super absorbent recycled polymer has a water absorption ratio of preferably 80 times (g/g) or less, and more preferably 70 times (g/g) or less. This is from the viewpoint of the absorption property and shape retention property of the super absorbent recycled polymer.

In the present specification, the water absorption ratio is measured as follows.

(1) A bag of nylon net (250-mesh nylon net, manufactured by NBC Meshtec Inc.) (200 mm $\times$ 200 mm) is prepared and the mass thereof No (g) is measured.

(2) Approximately 5 g of a sample is placed in the nylon net bag, and the mass Ao (g) of the sample including the nylon net bag is measured.

(3) After placing 1 L of physiological saline in a beaker, the nylon net bag containing the prepared sample is immersed therein and allowed to stand for 3 minutes.

(4) The nylon net bag is raised out and allowed to stand for 3 minutes on a draining net for drainage.

(5) The mass A (g) after drainage of the nylon net bag containing the sample is measured.

(6) Another set of nylon net bags cut out to the same size is prepared, and (3) and (4) are carried out in the same manner but without placing the sample therein, and the mass N (g) of the nylon net bags alone after drainage is measured.

(7) The water absorption ratio (times) is calculated by the following formula.

$$\text{Water absorption ratio (times)} = (A - N - (A_0 - N_0))/(A_0 - N_0)$$

(8) The measurement is conducted 10 times, and the average value of the 10 measurements is obtained.

The super absorbent recycled polymer has a water retention ratio of preferably 20 times (g/g) or more, more preferably 25 times (g/g) or more, and even more preferably 30 times (g/g) or more. The super absorbent recycled polymer has a water retention ratio of preferably 50 times (g/g) or less, and more preferably 45 times (g/g) or less. This is from the viewpoint of the water retention property and shape retention property of the super absorbent recycled polymer.

In the present specification, the water retention ratio is measured as follows.

(1) The mass B (g) of the sample obtained after the measuring the water absorption ratio described above is measured after dehydration for 90 seconds at 150 G with a centrifuge (separator manufactured by Kokusan Co., Ltd., Model H130, rotating speed of 850 rpm = 150 G).

$$\text{Water retention ratio} = (B - N - (A_0 - N_0))/(A_0 - N_0)$$

The measurement is conducted 10 times, and the average value of the 10 measurements is obtained.

The super absorbent recycled polymer manufactured by the manufacturing method of the present disclosure can be used without limitation in a field where the super absorbent polymer is used, and includes, for example, the field of sanitary products.

The sanitary product is not particularly limited, and examples thereof include disposable diapers, disposable underpants, sanitary napkins, panty liners, urine-absorbing pads, bed sheets, and pet sheets.

Examples

Hereinafter, the present disclosure will be described with reference to examples, but the present disclosure is not limited to these examples.

Example 1

<Dehydration Step>

A mixture of water-absorbed super absorbent polymer No. 1 (polyacrylate-based SAP) and pulp fibers was taken out from the absorbent body of a used disposable diaper. In the above mixture, the water-absorbed super absorbent polymer No. 1 and the pulp fibers were integrated and were difficult to be separated. Further, the water-absorbed super absorbent polymer No. 1 and the pulp fibers were colored in a brown-based color.
The above mixture was immersed in a dilute aqueous sulfuric acid solution having a pH of 2.0 for 10 minutes to dehydrate the super absorbent polymer and form a primarily dehydrated super absorbent polymer. The primarily dehydrated super absorbent polymer No. 1 and the pulp fibers were easily spaced apart from each other. Next, the primarily dehydrated super absorbent polymer No. 1 and the pulp fibers were separated.
The primarily dehydrated super absorbent polymer No. 1 was recovered, and the solid content thereof was measured according to the method described herein, and was found to be 15 mass%.
The primarily dehydrated super absorbent polymer No. 1 was retained in a container filled with particles of sodium sulfate itself for 30 minutes. The liquid-absorbed sodium sulfate was attached to the surface of the primarily dehydrated super absorbent polymer No. 1. The liquid-absorbed sodium sulfate attached to the surface of the primarily dehydrated super absorbent polymer No. 1 was removed by a sieve, and secondarily dehydrated super absorbent polymer No. 1 was formed. The secondarily dehydrated super absorbent polymer No. 1 was recovered, and the solid content was measured according to the method described herein, and was found to be 20 mass%. The secondarily dehydrated super absorbent polymer No. 1 was colored in a light brown-based color.

<Particle Group Attachment Step>

100 g of the secondarily dehydrated super absorbent polymer No. 1 was put into a particle group No. 1 of a super absorbent polymer (polyacrylate-based SAP, particle diameter: more than 50 $\mu$m and 150 $\mu$m or less in 100 mass%, solid content: 98 mass%), and super absorbent polymer No. 1 having the particle group attached thereto was formed. The solid content of the super absorbent polymer No. 1 having the particle group attached thereto was 30 mass%.

<Drying Step>

The super absorbent polymer No. 1 having the particle group attached thereto was dried at 100°C for 60 minutes to obtain super absorbent recycled polymer No. 1. The particles of the super absorbent recycled polymer No. 1 were not fixed to each other.
The whiteness (W), yellowness (YI), water absorption ratio, and water retention ratio of the super absorbent recycled polymer No. 1 are shown in Table 1.

Comparative Example 1

A super absorbent recycled polymer mass was obtained in the same manner as in Example 1 except that the particle group No. 1 of the super absorbent polymer was not attached to the secondarily dehydrated super absorbent polymer No. 1. The super absorbent recycled polymer mass was formed by fixing particles to each other during drying. The super absorbent recycled polymer mass was pulverized by using a well-known pulverizer to obtain super absorbent recycled polymer No. 2 having the same particle diameter as the super absorbent recycled polymer No. 1.
The whiteness (W), yellowness (YI), water absorption ratio, and water retention ratio of the super absorbent recycled polymer No. 2 are shown in Table 1.

[Table 1]

Table 1

| Super absorbent recycled polymer No. | No. 1 | No. 2 |
|---|---|---|
| Whiteness (W) | 81 | 75 |
| Yellowness (YI) | 19 | 24 |
| Water absorption ratio (times (g/g)) | 47 | 38 |
| Water retention ratio (times (g/g)) | 28 | 20 |

**Claims**

1. A method of manufacturing a super absorbent recycled polymer regenerated from a used super absorbent polymer, the method comprising:

   a dehydration step of dehydrating the used super absorbent polymer to form a dehydrated super absorbent polymer;
   a particle group attachment step of attaching a particle group of a super absorbent polymer to the dehydrated super absorbent polymer to form a super absorbent polymer having the particle group attached thereto, and causing the particle group to absorb moisture retained by the dehydrated super absorbent polymer; and
   a drying step of drying the super absorbent polymer having the particle group attached thereto to form the super absorbent recycled polymer.

2. The method according to claim 1, wherein
   the super absorbent recycled polymer has a whiteness (W) of 80 or more and a yellowness (YI) of 20 or less.

3. The method according to claim 1 or 2, wherein
   in the dehydration step, the dehydrated super absorbent polymer is formed by contacting the used super absorbent polymer with a salt, an acid, or a base.

4. The method according to claim 3, wherein
   in the dehydration step, the dehydrated super absorbent polymer is formed by contacting the used super absorbent polymer with the salt.

5. The method according to claim 3, wherein
   the used super absorbent polymer contains an acid group, in the dehydration step, the dehydrated super absorbent polymer is formed by immersing the used super absorbent polymer in an aqueous solution containing the base, and the base is an alkali metal hydroxide.

6. The method according to claim 3, wherein
   the used super absorbent polymer contains an acid group, and in the dehydration step, the acid is an acid having an acid dissociation constant ($pK_a$, in water) which is smaller than an acid dissociation constant ($pK_a$, in water) of the acid group.

7. The method according to any one of claims 1 to 6, wherein
   in the dehydration step, the dehydrated super absorbent polymer has a solid content of 10 mass% or more.

8. The method according to any one of claims 1 to 7, wherein
   in the particle group attachment step, the super absorbent polymer having the particle group attached thereto has a solid content of more than 30 mass%.

9. The method according to any one of claims 1 to 8, wherein
   in the particle group attachment step, the particle group of the super absorbent polymer has a solid content of 90 mass% or more.

10. The method according to any one of claims 1 to 9, wherein

in the particle group attachment step, the particle group of the super absorbent polymer includes 60 mass% or more of particles having a particle diameter of more than 45 μm and 300 μm or less.

11. The method according to any one of claims 1 to 10, wherein
in the drying step, the super absorbent polymer having the particle group attached thereto is dried at a drying temperature of 80°C to 150°C for 60 to 180 minutes.

12. The method according to any one of claims 1 to 11, wherein

the used super absorbent polymer is included in a used sanitary product which contains pulp fibers, and
the dehydration step includes the following sub-steps of

a primary dehydration sub-step of primarily dehydrating a mixture including the used super absorbent polymer and the pulp fibers to form a primarily dehydrated super absorbent polymer having a solid content of 2.0 to 9.0 mass% from the used super absorbent polymer, and separating the primarily dehydrated super absorbent polymer and the pulp fibers, and
a secondary dehydration sub-step of dehydrating the primarily dehydrated super absorbent polymer to form a secondarily dehydrated super absorbent polymer having a solid content of 10.0 to 40.0 mass%.

13. A super absorbent recycled polymer regenerated from a used super absorbent polymer, the super absorbent recycled polymer comprising:

a super absorbent polymer recovered from the used super absorbent polymer, and a particle group of a super absorbent polymer linked to a surface of the super absorbent polymer, wherein
the super absorbent recycled polymer has a whiteness (W) of 80 or more, and
a yellowness (YI) of 20 or less.

14. The super absorbent recycled polymer according to claim 13, wherein
the super absorbent recycled polymer has a water absorption ratio of 30 times (g/g) or more.

15. The super absorbent recycled polymer according to claim 13 or 14, wherein
the super absorbent recycled polymer has a water retention ratio of 20 times (g/g) or more.

# EP 4 115 973 A1

**INTERNATIONAL SEARCH REPORT**

International application No.

PCT/JP2021/007969

**A. CLASSIFICATION OF SUBJECT MATTER**
Int. Cl. B01J20/30(2006.01)i, B01J20/24(2006.01)i, B01J20/26(2006.01)i
FI: B01J20/30, B01J20/26 D, B01J20/24 B

According to International Patent Classification (IPC) or to both national classification and IPC

**B. FIELDS SEARCHED**

Minimum documentation searched (classification system followed by classification symbols)
Int. Cl. B01J20/00-20/34, A61L2/00-2/28, A61L11/00, A61F13/15-13/84,
C08J11/00-11/28, B09B1/00-5/00

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-520244 A (THE PROCTER & GAMBLE CO.) 06 | 13-15 |
| A | June 2013, claims 1, 6, paragraphs [0039], [0094]-[0108] | 1-12 |
| X | JP 2006-063508 A (MITSUBISHI CHEMICAL CORP.) 09 | 13-15 |
| A | March 2006, claim 8, paragraphs [0016]-[0065], [0104], [0154] | 1-12 |
| A | JP 2003-326161 A (NIPPON SHOKUBAI CO., LTD.) 18 November 2003 | 1-15 |
| A | WO 2013/141357 A1 (NATIONAL UNIVERSITY CORPORATION HOKKAIDO UNIVERSITY) 26 September 2013 | 1-15 |

☒  Further documents are listed in the continuation of Box C.       ☐  See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 08.04.2021 | 20.04.2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
|---|
| PCT/JP2021/007969 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 63-241000 A (MITSUBISHI PETROCHEMICAL CO., LTD.) 06 October 1988 | 1-15 |

Form PCT/ISA/210 (continuation of second sheet) (January 2015)

INTERNATIONAL SEARCH REPORT

Information on patent family members

International application No.

PCT/JP2021/007969

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003326161 A

**Non-patent literature cited in the description**

- Handbook of Electrochemistry